# EUROPÄISCHE PATENTSCHRIFT

(11) **EP 1 001 679 B1**
(45) Veröffentlichungstag und Bekanntmachung des Hinweises auf die Patenterteilung: **27.11.2002**
(21) Anmeldenummer: 98959884.2
(22) Anmeldetag: 25.11.1998
(51) Int. Cl.: A01N 43/84

(54) **VERFAHREN ZUR BEKÄMPFUNG VON POA ANNUA IN RASENFLÄCHEN UND VERWENDUNG VON FENPROPIMORPH ALS HERBIZID**
PROCESS FOR COMBATING POA ANNUA IN LAWN SURFACES AND USE OF FENPROPIMORPH AS HERBICIDE
PROCEDE POUR LUTTER CONTRE LE PATURIN ANNUEL DANS LES SURFACES DE GAZON ET UTILISATION DE FENPROPIMORPH COMME HERBICIDE

(30) Priorität: 26.11.1997 DE 19752406
(43) Veröffentlichungstag der Anmeldung: 24.05.2000
(73) Patentinhaber: Sanogreen S.A.R.L., 3327 Crauthem (LU)
(72) Erfinder: DEWAR, Tom, Howden DN14 7JA (GB)
(74) Vertreter: Fritsche, Rainer, Dipl.-Wirtsch.-Ing.
(86) Internationale Anmeldenummer: EP9807592
(87) Internationale Veröffentlichungsnummer: WO99026477

(56) Entgegenhaltungen:
- EP-A- 0 661 001
- WO-A-97/00013
- DD-A- 268 819
- DE-A- 2 440 787
- DATABASE CROPU DERWENT INFORMATION LTD / STN-International STN-accesion no. 91-80864, P.L. SANDERS & M.D. SOIKA: "Brown Blight Enhancement in 1989 Assoicated with Fungicides Applied in 1988 " XP002098658 & FUNGIC .NEMATIC. TESTS , Bd. 45, - 1990 Seite 288
- C. TOMLIN (ED): "The Pesticide Manual, Tenth edition " 1995 , THE ROYAL SOCIETY OF CHEMISTRY , CAMBRIDGE, GB; XP002098657 see Seite 448-9, Eintrag Nr. 305: "fenpropimorph"

## Beschreibung

Die Erfindung betrifft ein Verfahren zur Bekämpfung von Poa annua in Rasenflächen, insbesondere in Greens von Golfplätzen; sie betrifft außerdem die Verwendung von Fenpropimorph als Herbizid zur Bekämpfung von Poa annua in Rasenflächen.

Ausgehend von den klassischen Golfländern wie Schottland, England und den USA, hat der Golfsport in den letzten Jahrzehnten insbesondere auch in Europa und in Südostasien (dort insbesondere in Japan) zunehmende Verbreitung gefunden. Daraus entsteht die Notwendigkeit, dem Golfspieler einen Platz zur Verfügung zu stellen, der - insbesondere was die Qualität des Greens anlangt - höchsten Ansprüchen genügt.

Eine der traditionellen Aufgaben von Greenkeepern und Golfmanagern besteht in der Bekämpfung von unerwünschten Gräsern und Kräutern, insbesondere in der Bekämpfung von Poa annua in Greens. Die Poa annua (Einjährige Wiesenrispe; englisch: annual bluegrass) stellt wegen ihrer besonderen Wachstumseigenschaften ein extrem schwer zu bekämpfendes Rasenunkraut dar. Die Pflanze blüht bei warmen Witterungsbedingungen fast über das ganze Jahr und erzeugt dabei Blütenstände (Rispen, bestehend aus einzelnen Ährchen), die zu Unebenheiten in der Oberfläche des Golfplatzes, insbesondere in Greens, führen. Während der Hauptblühperiode wird also die Qualität der Rasenoberfläche (und damit die Berechenbarkeit, mit der der Goolfball rollt) durch das Herausragen der zahlreichen Blütenstände stark beeinträchtigt. Poa annua hat die einzigartige Eigenschaft, daß ihre Samen innerhalb von 1 bis 2 Tagen nach der Befruchtung reifen. Dies macht die hohe Reproduktionsfähigkeit dieser Pflanze aus. Das vegetative Reproduktionsvermögen ist sehr gering, doch die generative Verbreitung ist durch die ständige und hohe Samenproduktion extrem hoch. Nicht gekeimtes Saatgut überdauert den Winter unbeschadet und keimt bei milden Temperaturen sofort wieder aus.

Selbst bei einer Schnitthöhe von wenigen Millimetern kann die Pflanze Blüten erzeugen. Dadurch entsteht ein weiteres Problem für die Qualität von Golfgreens. Augfrund ihres besonders dichten Wachstums überwuchert die Poa annua das Green, weil die meisten dort verwendeten Rasensorten nicht so extrem dicht wachsen. Dabei bildet sie einen ünerwünschten fleckenartigen Bewuchs, ähnlich einem Mooskissen. Dies führt zu einem ungleichmäßigen Bewuchs des Greens und damit ebenfalls zu einem schwer einzuschätzenden Rollverhalten des Golfsballs. Gleiches gilt für andere Rasensportarten wie Cricket und Rasenbowling.

Bei großer Hitze und während des Winters stirbt die Pflanze ab, was zur Bildung von großflächigen braunen Stellen in den Greens führt, die den Golfplatz unästhetisch erscheinen lassen und teilweise unbespielbar machen.

Zur Bekämpfung der Poa annua gab es verschiedene Ansätze, von denen jedoch keiner dauerhaft erfolgreich war. Neben der traditionellen Bekämpfung durch mechanische Beseitigung wurden in den zwanziger Jahren Arsenate als chemische Bekämpfungsmittel entwickelt und zu Beginn der dreißiger Jahre in großem Umfang erprobt. Obwohl mit Arsenaten in gewissem Umfang Erfolge erzielt wurden, mußten diese Substanzen aufgrund ihrer Toxizität gegenüber dem Menschen aufgegeben werden. Heute spielen Arsenate bei der Bekämpfung der Poa annua keine Rolle mehr.

Später wurden organische Herbizide eingesetzt, die je nach Typ als Keimhemmer, als Wachstumsregulatoren oder auf andere Weise wirkten. Das spektakulärste davon war Methylbromid, ein praktisch unselektives Herbizid, von dessen Einsatz aus ökologischen Gründen heute weitgehend abgesehen wird.

Mit keinem der vorgenannten Herbizide wurde ein dauerhafter Erfolg bei der Bekämpfung der Poa annua erzielt. Einen Überblick über den Stand der Technik geben die bekannte Monographie von Beard (J. B. Beard, Turf Management for Golf Courses, Macmillan Publishing Company, New York 1982) sowie insbesondere ein neuerer Aufsatz von Christians (N. Christians, A Historical Perspective of Annual Bluegrass Control, Golf Course Management, November 1996, S. 49-57). In einer kürzlich erschienenen Presseveröffentlichung (Rasen/Turf/Gazon, Greenkeepers Journal, **28** (1997, Heft 2) Seite 46, ISSN 0341-9789) äußert sich Beard dahingehend, daß auf vielen Greens der Besatz mit Poa annua so weit fortgeschritten sei, daß eine Bekämpfung keinen Sinn mehr mache.

Es ist die Aufgabe der Erfindung, Mittel zur Verfügung zu stellen, mit denen Poa annua insbesondere in Greens wirksam und selektiv bekämpft werden kann.

Diese Aufgabe wird gelöst mit einem Verfahren gemäß Anspruch 1 sowie mit der Verwendung gemäß Anspruch 16.

Gegenstand der Erfindung ist somit ein Verfahren zur Bekämpfung von Poa annua in Rasenflächen, insbesondere in Greens von Golfplätzen, bei dem man die Rasenfläche mit einer herbizid wirksamen Menge Fenpropimorph behandelt. Gegenstand der Erfindung ist weiterhin die Verwendung von Fenpropimorph als Herbizid zur Bekämpfung von Poa annua in Rasenflächen.

Die erfindungsgemäße Verwendung von Fenpropimorph als Herbizid zur Bekämpfung von Poa annua in Rasenflächen und das darauf aufbauende Verfahren beruhen auf einer überraschenden und bisher nicht beschriebenen herbiziden Wirkung von Fenpropimorph. Bei dieser Substanz handelt es sich um ein Morpholinderivat, nämlich um (±)-cis-4-[3-(4-tert-Butylphenyl)-2-methoylpropyl]-2,6-dimethylmorpholin (IUPAC), für welches die Bezeichnung "Fenpropimorph" als Common name verwendet wird. Fenpropimorph hat eine molare Masse von 303,5 und einen Schmelzpunkt von ca. - 16° C, stellt also eine bei Raumtemperatur flüssige Substanz dar.

Fenpropimorph wird in der Literatur als systemisch wirkendes Fungizid beschrieben, dem z.B. im Getreidebau eine Wirkung gegenüber Echtem Mehltau sowie Blattflecken- und Rostkrankheiten zukommt (siehe z.B. Römpp Chemielexikon, 9. Auflage, 1990). Eine herbizide Wirkung dieser Substanz - insbesondere gegenüber Poa annua - wurde noch nicht beschrieben.

Die zur Erreichung der herbiziden Wirkung erforderliche Menge Fenpropimorph kann in weiten Bereichen schwanken und hängt hauptsächlich von den Wachstumsbedingungen ab, denen die zu bekämpfende Poa annua ausgesetzt ist. Allgemein bevorzugt ist eine applizierte Menge Fenpropimorph im Bereich von 500 bis 2.000 g pro 1.000 m² Rasenfläche. Bei höheren Temperaturen (bei denen ein schnelleres Wachstum zu erwarten ist) ist die Dosierung höher als bei niederen Temperaturen. Innerhalb des angegebenen Bereichs ist bei Temperaturen von +5 bis +13 °C eine Dosierung von 500 bis 1.000 g, bei +13 bis +20 °C von 1.000 bis 1.250 g und oberhalb von +20 °C von 1.250 bis 2.000 g besonders bevorzugt (alle Werte beziehen sich auf 1.000 m² Rasenfläche).

Wenn die zu bekämpfenden Poa annua zusammen mit empfindlichen Rasensorten vorkommt, ist es bevorzugt, die eingesetze Dosis von Fenpropimorph etwas zu verringern, um Schäden an diesen Rasensorten zu vermeiden. Solche Rasensorten sind Agrostis und damit verwandte Rasensorten, wie z.B. Stolenifera, Palustrus und Tennius. Es wird dann eine Dosierung von 250 bis 1.250 g/ 1.000 m² bevorzugt.

Die Aufnahme von Fenpropimorph durch die Pflanze erfolgt hauptsächlich foliar, d.h. über deren oberirdische grüne Teile, womit die Substanz weitgehend ein Blatt-Herbizid darstellt. Zur Anwendung eignet sich deshalb eine flüssige stabile Emulsion von Fenpropimorph in Wasser, die über der Rasenfläche versprüht wird. Zum Versprühen eignen sich übliche Vorrichtungen, die im Bereich der Landwirtschaft, des Gartenbaus und des Golfmanagements eingesetzt werden. Eine bevorzugte Arbeitskonzentration der Emulsion liegt im Bereich von 5 bis 20 g/l. Um die foliare Aufnahme zu unterstützen, enthält die Emulsion bevorzugt ein Benetzungsmittel, weil dies dazu führt, das die wässrige Emulsion auf den Blättern einen dünnen Film ausbildet, aus der durch Verdunsten des Wassers eine dünne Schicht entsteht.

Fenpropimorph zeigt die aufgefundene herbizide Wirkung gegenüber Poa annua jedoch nicht während der Blütezeit der Poa-annua-Pflanzen, also während der Zeit, in der die Blütenstände gebildet werden.

Fenpropimorph wirkt bei der jeweils angegebenen Dosierung praktisch selektiv alleine gegen Poa annua und verschont weitgehend andere Rasensorten. Durch das Absterben der Poa-annua-Pflanzen bilden sich in der Rasenfläche braune Bereiche, die durch Ausbringen von Saatgut der gewünschten Rasensorte rekultiviert werden können. Wahlweise können dabei die abgetöteten Poa-annua-Pflanzen vorher mechanisch entfernt werden. Fenpropimorph zeigt keinerlei nachteilige Auswirkungen auf frisch ausgebrachtes Saatgut.

Das Ausbringen von Saatgut kann durch herkömmliches Übersäen mit ungekeimtem Saatgut erfolgen oder durch Aufbringen eines Kultursubstrats, welches vorgekeimtes Saatgut enthält. Je nach Ausmaß und Art der Schädigung der Rasenfläche durch abgetötete Poa-annua-Pflanzen kann dabei das Ausbringen des Saatguts unselektiv auf die gesamte Rasenfläche erfolgen (oder auf einzelne Teile davon) oder selektiv auf die geschädigten Stellen beschränkt werden. Verfahrensbedingt ergibt jedoch das herkömmliche Übersäen - insbesondere bei Einsatz einer Sämaschine - eher ein unselektives Ausbringen des Saatguts, wogegen sich Kultursubstrat mehr dazu eignet, nur selektiv an einzelnen Stellen aufgebracht zu werden.

Aufgrund der besonderen Wachstumseigenschaften von Poa annua sollten die Rekultivierungsmaßnahmen an die klimatischen Bedingungen angepaßt werden, denen der Golfplatz ausgesetzt ist. In nördlichen Regionen mit kühl-trockenem bzw. kühl-feuchtem Klima (z.B. in Mittel- und Nordeuropa sowie in den nördlichen Teile der USA) ist die Vegetation von einem Sommer/Winter-Wechsel geprägt, wobei das Pflanzenwachstum im Winter praktisch völlig zum Erliegen kommt. In südlichen Regionen mit warm-feuchtem und warm-trockenem Klima (diese Klimazonen befinden sich z.B. in Kalifornien und Südeuropa) findet keine Unterbrechung der Pflanzenwachstums im Sinne eines Sommer/Winter-Wechsels statt, d.h. der Winter ist praktisch ein Sommer mit abgeschwächter Wachstumstätigkeit.

Wie bereits erwähnt wurde, ist die erfolgreiche Anwendung von Fenpropimorph an Bedingungen gebunden, bei denen die Bildung der Blütenstände bei der Poa annua aussetzt (oder zumindest stark abgeschwächt ist). Diese Bedingungen sind in der kühleren Jahreszeit gegeben (d.h. in der Zeit von Herbst bis zum nächsten Frühjahr), die in beiden Klimaregionen jedoch von unterschiedlicher Dauer und Auswirkung ist.

In den nördlichen Regionen beginnt die gegeignete Jahreszeit im September und endet im Mai. Da aber während des dazwischenliegenden Winters das Pflanzenwachtum unterbrochen ist, ist es aus mehreren Gründen sinnvoll, die Behandlung mit Fenpropimorph und das anschließende Rekultivieren im Frühjahr durchzuführen. Einmal ist im Frühjahr gewährleistet, daß der Wirkstoff von der Poa annua aufgenommen und systemisch verarbeitet wird. Außerdem bestehen die besten Voraussetzungen für ein gutes Keimen des ausgebrachten Saatguts. Im Herbst sind diese Voraussetzungen nicht gegeben, weshalb die Behandlung mit Fenpropimorph in dieser Jahreszeit weniger bevorzugt ist. Besonders die Aufnahme und die systemische Verarbeitung des Wirkstoffs kann durch einen unerwarteten Kälteeinbruch unterbunden werden, der zum vorzeitigen Erliegen der biologischen Aktivität im laufenden Wachstumsjahr führt.

In den südlichen Regionen beginnt einmal die geeignete Jahreszeit je nach geographischer Breite wesentlich später und ist von kürzerer Dauer. Außerdem ist während des dazwischenliegenden Winters das Pflanzenwachstum nicht unterbunden, sondern nur vermindert (Rasen zeigt noch bis zu Temperaturen von +4 °C ein merkliches Wachstum). Die Behandlung mit Fenpropimorph kann deshalb praktisch während der gesamten kühleren Jahreszeit durchgeführt werden.

Aus den genannten Gründen wird in nördlichen Regionen mit ausgeprägtem Sommer Winter-Wechsel die Behandlung mit Fenpropimorph bevorzugt im Frühjahr vor dem Einsetzen der Blüte durchgeführt. In diesem Fall erfolgt die Rekultivierung bevorzugt unmittelbar nach Eintritt der Wirkung des Fenpropimorphs und bevorzugt durch Aufbringen eines Kultursubstrats, welches vorgekeimtes Saatgut enthält. Bei einer Behandlung im Herbst erfolgt das Rekultivieren bevorzugt durch Übersäen mit ungekeimtem Saatgut. Da dieses Saatgut dazu bestimmt ist, erst im nächsten Frühjahr zu keimen, muß das Übersäen nicht unmittelbar nach dem Wirkungseintritt des Fenpropimorphs durchgeführt werden. Wahlweise - z.B. wenn es Anzeichen dafür gibt, daß das im Herbst ausgebrachte Saatgut im Winter durch Kälteeinwirkung oder dergleichen geschädigt wurde - kann im Frühjahr (d.h. zu Beginn der nächsten Wachtumsperiode) vorgekeimtes Saatgut in der beschriebenen Weise auch zusätzlich ausgebracht werden.

In südlichen Regionen ohne ausgeprägten Sommer/Winter-Wechsel ist dagegen das Rekultivieren mit Kultursubstrat allgemein bevorzugt, weil das mit dem Kultursubstrat ausgebrachte vorgekeimte Saatgut praktisch während der gesamten kühlen Jahreszeit zur Bildung von Keimlingen befähigt ist. Aus diesem Grund wird das Kultursubstrat auch bevorzugt unmittelbar nach Wirkungseintritt aufgebracht.

Es wurde bereits darauf hingewiesen, daß die eingesetzte Menge Fenpropimorph an die Temperatur angepaßt werden sollte, der die Poa annua ausgesetzt ist. Die hierzu für die einzelnen Temperaturbereiche angegebenen Dosierungen sind besonders bevorzugt.

Fenpropimorph ist im Handel als stabiles wässriges Emulsionskonzentrat erhältlich und wird beispielsweise von der BASF AG und der Novartis AG unter den Namen Corbel^{R} (eingetragene Marke der Dr. R. Maag AG) angeboten. Diese Zubereitung enthält den Wirkstoff Fenpropimorph in einer Konzentration von 750 g/l.

Die nachfolgenden Beispiele beschreiben die Erfindung weiter.

Auf einem in Italien in der Nähe von Rom gelegenen 18-Loch-Golfplatz wurden im Monat Februar 13 Greens zur Behandlung einer Fusarium-Fäule (Sommerfusariose; englisch: fusarium blight oder fusarium patch) mit einer Lösung behandelt, die nur Prochloraz enthielt. Prochloraz ist ein gegen Fusarium eingesetztes Fungizid. Die anderen fünf Greens wurden mit einer Lösung behandelt, die ein Gemisch aus Prochloraz und Fenpropimorph (Konzentration unbekannt) enthielt. Nach 15 Tagen zeigten sich die 13 mit reinem Prochloraz behandelten Greens als frei von der Fusarium-Fäule. Die fünf mit dem Gemisch aus Prochloraz und Fenpropimorph behandelten Greens zeigten große Flächenbereiche mit abgestorbenem Gras, welches sich als abgestorbene Poa-annua-Pflanzen erwiesen. Die Straußgras-Population (englisch: bent-grass) dieser fünf Greens blieb unbeeinflußt. Nach fünf Tagen wurden die abgestorbenen Poa-annua-Pflanzen mechanisch entfernt und die Greens mit Straußgras-Saatgut neu angesät. Das Saatgut zeigte normales Keimverhalten und entwickelte innerhalb von acht Tagen Keimlinge.

Die Versuche wurden im Monat März auf einem Fußballfeld und im darauffolgenden Winter (November bis Februar) auf drei Golfplätzen in Italien wiederholt, wobei die Wirkstoffmenge auf den einzelnen Greens varriert wurde. Es zeigte sich, daß bei Außentemperaturen im Bereich von +5 bis +13 °C mit einer applizierten Menge von 0,67 bis 1,33 l Corbel^{R} pro 1.000 m² Rasenfläche (dies entspricht 502 bis 997,5 g Fenpropimorph pro 1.000 m²) die Poa annua in allen Fällen sicher abgetötet wurde. Bei Außentemperaturen oberhalb von + 20 °C war hierzu eine Menge im Bereich von mindestens 1,67 I Corbel^{R} pro 1.000 m² erforderlich (dies entspricht 1.252 g Fenpropimorph pro 1.000 m²). Eine Steigerung über 2,67 I Corbel^{R} pro 1.000 m² ergab keine weitere wesentlich Verbesserung. Die Nachkommastellen entstehen durch die Drittelung der Corbel^{R}-Flaschen (1/3 = 0,33 l).

Als Richtwert gemäß dem augenblicklichen Erkenntnisstand kann folgende Dosierung angegeben werden:

| | |
|---|---|
| +5 bis +13 °C | 1 l Corbel^{R} (=750 g Fenpropimorph) pro 1.000 m² |
| + 13 bis +20 °C | 1.5 I Corbel^{R} (= 1125 g Fenpropimorph) pro 1.000 m² |
| > + 20 °C | 2 l Corbel^{R} (= 1500 g Fenpropimorph) pro 1.000 m² |

Die angegebene Dosierung gilt für Poa annua, die nicht zusammen mit empfindichen Rasensorten wie Agrostis oder damit verwandten Sorten vorkommt.

## Patentansprüche

1. Verfahren zur Bekämpfung von Poa annua in Rasenflächen, insbesondere in Greens von Golfplätzen,
**dadurch gekennzeichnet, daß**
man die Rasenfläche mit einer herbizid wirksamen Menge Fenpropimorph behandelt.

2. Verfahren nach Anspruch 1, **dadurch gekennzeichnet, daß** die applizierte Menge Fenpropimorph 500 bis 2.000 g pro 1.000 m² Rasenfläche beträgt.

3. Verfahren nach Anspruch 2, **dadurch gekennzeichnet, daß** man die Behandlung bei mittleren Tages-Außentemperaturen von + 5 bis + 13 °C durchführt, wobei die applizierte Menge an Fenpropimorph 500 bis 1.000 g pro 1.000 m² Rasenfläche beträgt.

4. Verfahren nach Anspruch 2, **dadurch gekennzeichnet, daß** man die Behandlung bei mittleren Tages-Außentemperaturen von +13 bis +20 °C durchführt, wobei die applizierte Menge an Fenpropimorph 1.000 bis 1.250 g pro 1.000 m² Rasenfläche beträgt.

5. Verfahren nach Anspruch 2, **dadurch gekennzeichnet, daß** man die Behandlung bei mittleren Tages-Außentemperaturen von mehr als + 20 °C durchführt, wobei die applizierte Menge an Fenpropimorph 1.250 bis 2.000 g pro 1.000 m² Rasenfläche beträgt.

6. Verfahren nach Anspruch 1, **dadurch gekennzeichnet, daß** die applizierte Menge Fenpropimorph 250 bis 1.250 g pro 1.000 m² Rasenfläche beträgt.

7. Verfahren nach Anspruch 6 **dadurch gekennzeichnet, daß** man die applizierte Menge Fenpropimorph von 250 bis 1.250 g pro 1.000 m² Rasenfläche zur Bekämpfung von Poa annua einsetzt, die zusammen mit Agrostis und damit verwandten Rasensorten vorkommt.

8. Verfahren nach einem der vorhergehenden Ansprüche, **dadurch gekennzeichnet, daß** man die Behandlung durch Versprühen einer stabilen Emulsion von Fenpropimorph in Wasser auf der Rasenfläche durchführt.

9. Verfahren nach Anspruch 8, **dadurch gekennzeichnet, daß** die Konzentration von Fenpropimorph in Wasser 5 bis 20 g/l beträgt.

10. Verfahren nach Anspruch 8 oder 9, **dadurch gekennzeichnet, daß** die Emulsion ein Benetzungsmittel enthält.

11. Verfahren nach einem der vorhergehenden Ansprüche, **dadurch gekennzeichnet, daß** man die Behandlung im Frühjahr durchführt.

12. Verfahren nach Anspruch 11, **dadurch gekennzeichnet, daß** man nach der Behandlung mit Fenpropimorph und im wesentlichen unmittelbar nach Eintritt von dessen Wirkung auf die abgetötete Poa-annua-Pflanzen aufweisenden Stellen der Rasenfläche, auf die gesamte Rasenfläche oder auf Teile davon ein Kultursubstrat aufbringt, welches vorgekeimtes Saatgut der gewünschten Rasensorte enthält, wobei man wahlweise die abgetöteten Poa-annua-Pflanzen vorher mechanisch entfernt.

13. Verfahren nach einem der Ansprüche 1 bis 10, **dadurch gekennzeichnet, daß** man die Behandlung im Herbst durchführt.

14. Verfahren nach Anspruch 13, **dadurch gekennzeichnet, daß** man die abgetötete Poa-annua-Pflanzen aufweisenden Stellen der Rasenfläche, die gesamte Rasenfläche oder Teile davon nach der Behandlung mit Fenpropimorph mit Saatgut der gewünschten Rasensorte übersät, wobei man wahlweise die abgetöteten Poa-annua-Pflanzen vorher mechanisch entfernt.

15. Verfahren nach Anspruch 14, **dadurch gekennzeichnet, daß** man zusätzlich zum Übersäen im Herbst im darauffolgenden Frühjahr gemäß Anspruch 10 Kultursubstrat aufbringt, welches vorgekeimtes Saatgut enthält.

16. Verwendung von Fenpropimorph als Herbizid zur Bekämpfung von Poa annua in Rasenflächen.

## Claims

1. A method for controlling annual bluegrass in lawns, particularly in golf course greens, **characterized in that**
the lawn area is treated with a herbicidally effective quantity of Fenpropimorph.

2. Method according to claim 1, **characterized in that** the applied quantity of Fenpropimorph is in a range between 500 and 2,000 g per 1,000 m2 of lawn area.

3. Method according to claim 2, **characterized in that** the treatment is carried out at mean daytime outdoor temperatures between +5 and +13° C, wherein the applied quantity of Fenpropimorph is in a range between 500 and 1,000 g per 1,000 m2 of lawn area.

4. Method according to claim 2, **characterized in that** the treatment is carried out at mean daytime outdoor temperatures between +13 and +20° C, wherein the applied quantity of Fenpropimorph is in a range between 1,000 and 1,250 g per 1,000 m2 of lawn area.

5. Method according to claim 2, **characterized in that** the treatment is carried out at mean daytime outdoor temperatures higher than +20° C, wherein the applied quantity of Fenpropimorph is in a range between 1,250 and 2,000 g per 1,000 m2 of lawn area.

6. Method according to claim 1, **characterized in that** the applied quantity of Fenpropimorph is in a range from 250 to 1,250 g per 1,000 m2 of lawn area.

7. Method according to claim 6, **characterized in that** a quantity of Fenpropimorph ranging between 250 and 1,250 g per 1,000 m2 of lawn is applied to control annual bluegrass that occurs in conjunction with bentgrass and related grass varieties.

8. Method according to one of the preceding claims, **characterized in that** the treatment is effected by spraying onto the lawn area a stable emulsion of Fenpropimorph in water.

9. Method according to claim 8, **characterized in that** the concentration of Fenpropimorph in water is in a range between 5 and 20 g/l.

10. Method according to claim 8 oder 9, **characterized in that** the emulsion contains a wetting agent.

11. Method according to one of the preceding claims, **characterized in that** the treatment is carried out in the spring season.

12. Method according to claim 11, **characterized in that**, after treatment with Fenpropimorph and essentially immediately after its having taken effect, a cultivation substrate containing pre-germinated seeds of the desired grass variety is applied to those parts of the lawn exhibiting dead annual bluegrass plants, to the entire lawn area or to parts thereof, whereby the dead annual bluegrass plants may be removed previously by mechanical means.

13. Method according to one of claims 1 to 10, **characterized in that** the treatment is carried out in the autumn season.

14. Method according to claim 13, **characterized in that**, after treatment with Fenpropimorph, seeds of the desired grass variety are sown over those parts of the lawn exhibiting dead annual bluegrass plants, the entire lawn area or parts thereof, whereby the dead annual bluegrass plants may be previously removed by mechanical means.

15. Method according to claim 14, **characterized in that**, in addition to sowing new seed in autumn, a cultivation substrate containing pre-germinated seeds is applied in the following spring in accordance with claim 10.

16. Use of Fenpropimorph as a herbicide in order to control annual bluegrass in lawns.

## Revendications

1. Procédé pour lutter contre le pâturin annuel (« Poa annua ») dans des surfaces de gazon, notamment dans des greens de terrain de golf,
**caractérisé en ce qu'**on traite la surface de gazon avec une quantité de fenpropimorph ayant une action herbicide.

2. Procédé selon la revendication 1, **caractérisé en ce que** la quantité appliquée de fenpropimorph est égale à 500 à 2 000 g pour 1 000 m² de surface de gazon.

3. Procédé selon la revendication 2, **caractérisé en ce qu'**on effectue le traitement à des températures extérieures moyennes journalières de +5 à +13 °C, la quantité appliquée de fenpropimorph étant égale à 500 à 1 000 g pour 1 000² de surface de gazon.

4. Procédé selon la revendication 2, **caractérisé en ce qu'**on effectue le traitement à des températures extérieures moyennes journalières de +13 à +20 °C, la quantité appliquée de fenpropimorph étant égale à 1 000 à 1 250 g pour 1 000² de surface de gazon.

5. Procédé selon la revendication 2, **caractérisé en ce qu'**on effectue le traitement à des températures extérieures moyennes journalières supérieures à +20 °C, la quantité appliquée de fenpropimorph étant égale à 1 250 à 2 000 g pour 1 000² de surface de gazon.

6. Procédé selon la revendication 1, **caractérisé en ce que** la quantité appliquée de fenpropimorph est égale à 250 à 1 250 g pour 1 000 m² de surface de gazon.

7. Procédé selon la revendication 6, **caractérisé en ce qu'**on utilise la quantité appliquée de fenpropimorph de 250 à 1 250 g pour 1 000 m² de surface de gazon pour lutter contre le pâturin annuel (« Poa annua ») qui apparaît avec de l'agrostide et les espèces apparentées de gazons.

8. Procédé selon l'une quelconque des revendications précédentes, **caractérisé en ce qu'**on effectue le traitement en pulvérisant sur la surface de gazon une émulsion stable de fenpropimorph dans de l'eau.

9. Procédé selon la revendication 8, **caractérisé en ce que** la concentration de fenpropimorph dans l'eau est égale à 5 à 20 g/l.

10. Procédé selon la revendication 8 ou 9, **caractérisé en ce que** l'émulsion contient un agent tensioactif.

11. Procédé selon l'une quelconque des revendications précédentes, **caractérisé en ce qu'**on effectue le traitement au printemps.

12. Procédé selon la revendication 11, **caractérisé en ce que**, après le traitement au fenpropimorph et sensiblement juste après l'apparition de son action, on applique - sur les endroits de la surface de gazon présentant des plantes détruites de pâturin annuel (« Poa annua »), sur la totalité de la surface de gazon ou sur des parties de cette surface - un substrat de culture qui contient des semences pré-germées de l'espèce souhaitée de gazon, après avoir au préalable optionnellement enlevé mécaniquement les plantes détruites de pâturin annuel (« Poa annua »).

13. Procédé selon l'une quelconque des revendications 1 à 10, **caractérisé en ce qu'**on effectue le traitement en automne.

14. Procédé selon la revendication 13, **caractérisé en ce que**, après le traitement au fenpropimorph, on sursème de semences de l'espèce souhaitée de gazon les endroits de la surface de gazon présentant des plantes détruites de pâturin annuel (« Poa annua »), la totalité de la surface de gazon ou des parties de cette surface, après avoir au préalable optionnellement enlevé mécaniquement les plantes détruites de pâturin annuel (« Poa annua »).

15. Procédé selon la revendication 14, **caractérisé en ce que**, en plus du sursemis à l'automne, on applique au printemps suivant un substrat de culture qui contient des semences pré-germées, selon la revendication 10.

16. Utilisation de fenpropimorph comme herbicide pour lutter contre le pâturin annuel (« Poa annua ») dans des surfaces de gazon.
